Europäisches Patentamt

(19) European Patent Office

Office européen des brevets

(11) Publication number: 0 282 349
A2

# EUROPEAN PATENT APPLICATION

(21) Application number: 88302183.4

(22) Date of filing: 11.03.88

(51) Int. Cl.⁴: G 01 N 27/46

(30) Priority: 12.03.87 GB 8705907

(43) Date of publication of application:
14.09.88 Bulletin 88/37

(84) Designated Contracting States:
CH DE FR GB IT LI NL SE

(71) Applicant: MediSense, Inc.
128 Sidney Street
Cambridge Massachusetts 02139 (US)

(72) Inventor: McAleer, Jerome Francis
52 Nobles Close Grove Wantage
OXON. OX12 0NR (GB)

Blackburn, Christopher
13 Ely Close Abingdon
OXON OX14 5PU (GB)

Orman, Howard James
17 Stockey End Abington
OXON OX14 2NF (GB)

Andrews, Martyn Peter
Upper Mendip House Pullens Lane
Headington OXON (GB)

Hirst, Jennifer Ann
16 Woodlands Penwood Nr. Newbury
Berkshire RG15 9ES (GB)

(74) Representative: Ruffles, Graham Keith et al
MARKS & CLERK 57-60 Lincoln's Inn Fields
London WC2A 3LS (GB)

(54) Ion selective sensors.

(57) The present invention relates to the calibration and stabilisation of disposable ion-selective sensors by means of a hydrogel layer containing the relevant ionic species, located either between the electrodes and their covering membranes for stabilisation, or removably over the analyte contact area for calibration, or both.

EP 0 282 349 A2

**Description**

ION SELECTIVE SENSORS

The present invention relates to ion selective electrodes.

Ion selective electrodes are of general use in assays of mixed solutions of ions, where it is desired to assay one species of ion. A potential is set up between a standard reference electrode and an ion selective electrode (ISE). This potential is determined through ion exchange at the electrode/solution interface. Selectivity can be achieved by permitting only those ions of interest to come into contact with the electrode surface, or by judicious choice of ionophore.

Until recently, ISE's tended to be bulky, expensive and fragile, as glass membranes were used in their construction. Coated wire electrodes (CWE's) have a sensitive electrode formed from a wire coated with an ion selective layer comprised, for example, of an ionophore in a PVC matrix. CWE's have overcome certain problems associated with the older ISE's, but do not have a defined "inner" potential, due to the ill-defined contact between wire and selective coat. They must therefore be carefully calibrated before use. Further, as CWE's are capacitive in nature, readings tend to drift during use, owing to the presence of species in the assay mixture able to disperse charge.

Ion selective electrodes in strip form have recently become available and form the basis for ion sensors. These are small, disposable and inexpensive, and are described, for example in WO 85/02257. Strip sensors essentially comprise a reference electrode of, for example, silver/silver chloride and a sensitive electrode rendered ion selective by coating with an ion-selective membrane.

Calibration of ion-selective sensors is still awkward, requiring exposure to a standard solution prior to use, for precise calibration. Subsequent removal of the solution can result in damage occurring to the electrode.

It has now been discovered that strip sensors can be simply calibrated by the provision of a removable hydrogel layer containing a standard concentration of ion and covering the electrode surfaces on the strip.

Thus, in a first aspect of the present invention there is provided an ion-selective sensor, comprising a reference electrode and a sensitive electrode, with a removable hydrophilic gel or hydrogel layer containing a known concentration of the selected ion bridging the two electrodes.

The ion-selective sensor is preferably a strip which is, ideally, disposable. The sensitive electrode may be formed from graphite or silver, for example, and can be applied, for example by screen printing, over a conductive base track running the length of the strip to permit electrical contact with read-out equipment. The base is formed from a suitably inert substrate, such as polycarbonate. An ion-selective membrane (see, for example, Ebdon, L., & King, B. A., Trace Analysis, (1985), 4, ppl et seq.) positioned over the sensitive electrode provides selectivity. The remaining exposed surface area may be covered with an inert layer, such as polycarbonate, to provide protection and prevent uncontrolled contact with the electrodes.

The reference electrode is usually formed from conventional material and may comprise, for example, silver/silver chloride. To prevent shift of potential when used to measure ion concentrations in blood, the reference electrode may be covered by a suitable, protective hydrophobic layer.

In a preferred version of the sensor, the inner potential of the sensitive electrode is better defined by the presence of a hydrogel layer between the electrode and the ion-selective membrane. This serves to define more closely the contact between membrane and electrode using the selected ionic species. Improved resolution of readings is also observed when a similar hydrogel layer is provided for the reference electrode.

Thus, in a preferred embodiment, there is provided a sensor as defined above further comprising an ion-selective membrane and a protective membrane over the sensitive and reference electrodes, respectively, wherein each membrane is separated from its electrode by means of a hydrophilic gel layer as defined. It will be appreciated that, while a removable calibration layer is desirable in this embodiment, it is not essential, and such an embodiment without a calibration layer is within the scope of the present invention.

It is likely that the improvement in performance, and the considerable and surprising reduction in standard deviation between readings for different electrodes, is due to efficient, and substantially total, electrical contact between the gel and the membrane/electrode. When the membrane is placed on the electrode directly, the quality and consistency of electrical contact cannot be assured.

One advantage of the present invention lies in keeping any membranes covering the electrodes in a hydrated condition. Thus, not only is there provided a means for calibration and stabilisation of read-outs, but also a means for reducing the time required for taking a reading during assay, as this is at least partially increased by any necessity to first hydrate the membranes.

The hydrophilic calibration layer is conveniently hydrogel and contains a standard amount of the selected ion, for example 1mM of a potassium salt, such as potassium chloride, in the case of a potassium electrode.

The calibration layer can be positioned during manufacture of the electrode and the assembly kept in moisture-tight conditions, such as in a sealed sachet or container, until required for use. An initial measurement is taken, the layer removed and the test mixture substituted and assayed.

In an alternative aspect of the present invention, there is provided a method for calibrating an ion-selective sensor comprising taking a measurement from the sensor while a removable hydrophilic gel layer, containing a known concentration of the selected ion, bridges the reference electrode and the sensitive electrode.

Certain embodiments of the invention will now be described in more detail with reference to the accompanying Figures, in which:

Figure 1 shows a perspective view of an ion-selective sensor with calibration layer;

Figure 2 shows a lengthwise section on the sensor of Figure 1;

Figure 3 shows a graph of electrode potential vs. potassium concentration for the sensor of Figure 1;

Figure 4 shows a perspective view of an alternative ion-selective sensor;

Figure 5 shows a cross-section of the sensor of Figure 4;

Figure 6 shows a calibration graph of the sensor of Figure 4;

Figure 7 shows a cross-section of an alternative embodiment of a sensor according to the present invention; and

Figure 8 shows test results obtained using the sensor of Fig. 7

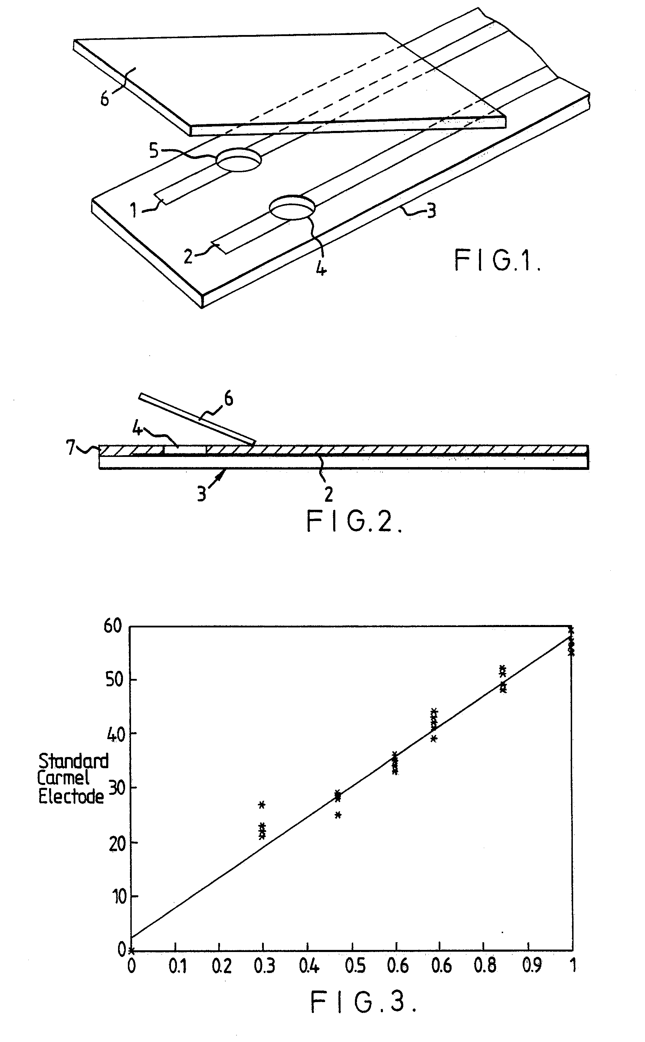

In Figure 1, sensitive electrode (1) and reference electrode (2) are printed over longitudinal conductive tracks on polycarbonate base (3). Hydrophobic membrane (4) containing a lipophilic salt of the reference anion, for example the tetra-(octadecyl)ammonium compound, or a thin ion-permeable membrane is cast or screen printed on to the reference electrode track (2) and ion selective membrane (5) is likewise cast or screen-printed on to the sensitive electrode track (1). The hydrogel calibrator (6) containing the selected ion is shown positioned above the electrodes. In practice, calibrator (6) is laminated flat with the sensor strip and a calibration reading taken before use. The calibrator is then removed for assay.

In Figure 2, a further insulation layer (7) covers the sensor, exposing only membranes (4), (5) (not shown) to the calibrator layer (6) and assay solution. This has the advantage of limiting contact with the assay solution to specific areas on the electrodes, thus preventing short circuiting between the conductive tracks.

Figure 3 shows a plot of electrode potential (measured in mV vs. a standard Calomel Electrode) vs. varying potassium ion concentrations (Log mM) in the sample as a semi-log plot. It can be seen that the relationship is linear, enabling use of a simple read-out device.

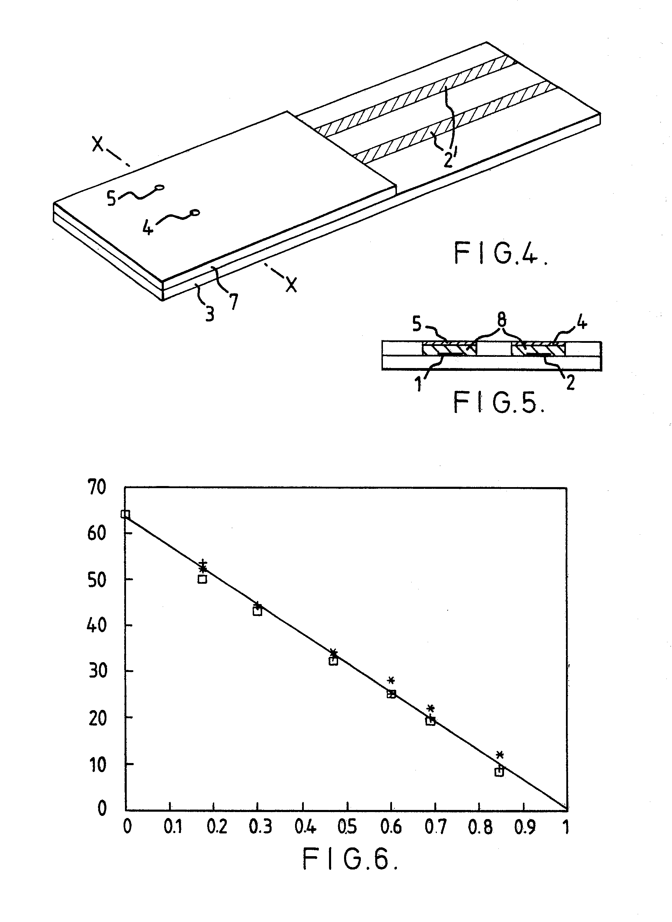

In Figure 4, the numerals indicate the same members as for Figure 1, with insulation (7) protecting the tracks, exposing only membranes (4), (5).

Figure 5 is a section (x-x) on Figure 4 illustrating internal hydrogel (8), containing a fixed concentration of the selected ion. This serves to standardise the electrode/membrane interface. Membranes (4), (5) are thus separated from tracks (1), (2) by hydrogel (8).

Figure 6 demonstrates the reduced margin of error obtained with the internally standardised sensors of Figures 4 and 5. Three sensors were used. A semi-log plot is again shown for electrode potential ((E-40)/mV) against varying concentrations of potassium ion (Log mM) present in the sample. The spread of measured potentials is very tight, illustrating the high degree of reproducibility obtainable using this type of sensor.

The following specific Examples illustrate the manufacture and use of one specific embodiment of a sensor according to the present invention.

## EXAMPLE 1:

### MANUFACTURE OF A POTASSIUM-SENSITIVE SENSOR

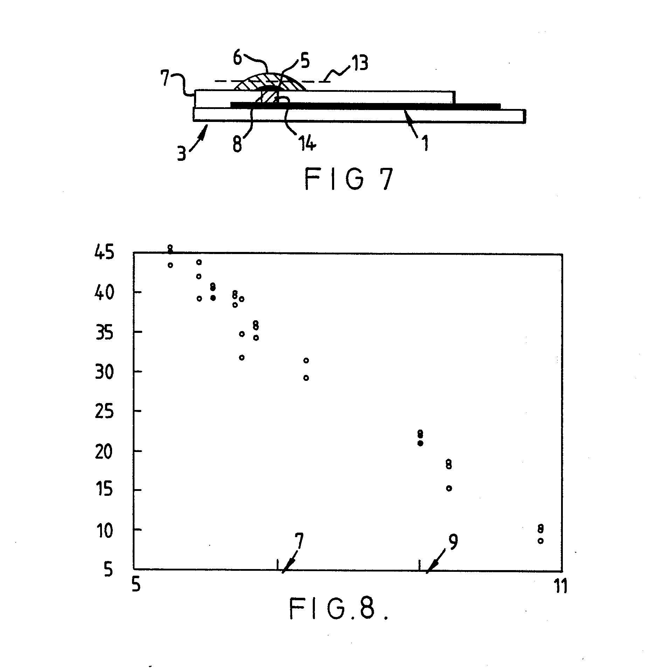

The sensor shown in cross-section in Figure 7 was made from two 0.5mm polycarbonate layers (3,7), laminated with acrylic transfer adhesive, with a silver/silver chloride electrode tracking (1) of 5% silver chloride in silver tracking ink on the lower layer (3) giving electrical connection via contacts at one end and exposed through holes (14) in the upper laminate at the sensing end.

The holes (14), or 'wells', in the upper laminate are filled with potassium-containing hydrogel (8) (comprising a gelatin gel containing glycerol) to give a stable 'inner' potential with respect to the silver/silver chloride track (1).

The holes (14) are then sealed with the reference and sensitive electrode membranes (4,5) prepared from solutions of PVC and plasticiser (for example dioctylsebacate). The sensitive membrane contains valinomycin and potassium tetrakis (4-chlorophenyl) borate and the reference membrane is made ion permeable by use of further solvent, thereby producing a thinner membrane. These are covered with the calibration hydrogel layer (6) and a fine nylon mesh (13) laid over while the layer is still molten, in order to key into it. This provides a tab to use for pulling the layer off after calibration.

## EXAMPLE 2:

### EXPERIMENTAL DATA

Measurements were made by inserting the sensor into the voltage measuring device and recording the rest potential with the sensor covered by the calibration hydrogel layer (6). The hydrogel layer (6) was then removed and the sample to be analysed placed in its stead. The equilibrium potential given was duly recorded. The value calibrated to remove the small differences between disposable strips is shown in Table 1 as the difference between the two measurements ($\Delta$).

Results from the measurement of $K^+$ in 7mM KCl/140mM NaCl solution in this way using strips from a number of batches are as follows:

## Table 1

| Sample Measurement | | | Corrected value (Δ) | |
|---|---|---|---|---|
| n | Mean (mV) | S.D. | Mean (mV) | S.D. |
| 9 | 47.1 | 2.19 | 55.7 | 0.65 |
| 11 | 46.0 | 3.17 | 55.0 | 2.09 |
| 10 | 49.9 | 2.95 | 58.4 | 0.71 |
| 10 | 43.3 | 2.89 | 53.5 | 1.56 |

Similarly, using blood samples: 4.2 mM $K^+$ by NOVA (registered trade mark) reference assay:-

| | | | | |
|---|---|---|---|---|
| 11 | 94.4 | 4.01 | 99.9 | 1.43 |

n= the number of electrodes from a given batch that were tested.

The reference assay was performed using a Nova 11 $Na^+$, $K^+$, $Li^+$ Analyser.

It will be seen that, in each case, by removing the differences between disposable strips within each lot, the standard deviation of measurements in each group is significantly reduced.

In the same way, using these strips to measure the $K^+$ concentration of many blood samples in the correlation study, both the correlation coefficient (R) and syx (residual standard deviation of data (Y) about the regression line based at the mean values of x) values are significantly improved when results from disposable strip sensors are calibrated in this way.

The graph of Figure 8 shows the results upon which the corrected values in Table 2, below, are based. The axes are potential difference, expressed as mV-60 (y), against Log $[K^+/mM]$ x 10 (x).

## Table 2

| | Uncorrected | Corrected |
|---|---|---|
| R | 0.974 | 0.988 |
| syx | 2.61 mV | 1.78mV |

## Claims

1. An ion-selective sensor, comprising a reference electrode and an ion-selective electrode, characterised in that a removable hydrophilic gel layer containing a known concentration of the selected ion bridges the analyte-contacting portions of the electrodes for calibration.

2. A sensor according to claim 1, wherein the sensor is a disposable strip sensor.

3. A sensor according to claim 1 or 2, wherein the gel is hydrogel.

4. A sensor according to any preceding claim, wherein ionic selectivity is conferred by an ion-selective membrane.

5. A sensor according to claim 4, wherein the reference electrode has a protective, hydrophobic membrane containing a lipophilic salt of the relevant anion.

6. A sensor according to claim 5, wherein the hydrophobic membrane is made from highly plasticised PVC.

7. A sensor according to claim 4, 5 or 6, wherein a gel layer as defined in any preceding claim separates membrane and electrode.

8. A method for calibrating a sensor as defined in any of claims 1 to 7, comprising taking a reading to calibrate the sensor prior to removal of the electrode bridging gel layer.

9. A sensor as defined in claim 7, not having the removable gel layer.

10. A sensor according to any of claims 1 to 7 or 9, for detecting potassium ion.

31·03·88

0282349

FIG.1.

FIG.2.

FIG.3.

F I G.4.

F I G.5.

F I G.6.

0282349

0282349

FIG 7

FIG.8.